(19) Europäisches Patentamt
European Patent Office
Office européen des brevets

(11) **EP 1 115 018 A1**

(12) **EUROPEAN PATENT APPLICATION**

(43) Date of publication:
**11.07.2001 Bulletin 2001/28**

(51) Int Cl.[7]: **G02B 6/44**

(21) Application number: **00310930.3**

(22) Date of filing: **08.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.01.2000 US 477772**

(71) Applicant: **LUCENT TECHNOLOGIES INC.**
**Murray Hill, New Jersey 07974-0636 (US)**

(72) Inventor: **Siddhamalli, Sridhar K.**
**Dunwoody, Georgia 30338 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(54) **Aliphatic polyketones fiber optic buffer tube material**

(57) The present invention provides a fiber optic buffer tube made of an aliphatic polyketone, wherein the aliphatic polyketone is a terpolymeric aliphatic polyketone. More specifically, the aliphatic polyketone is Carilon™. The present invention can also be viewed as describing a fiber optic cable. The fiber optic cable is made of at least one buffer tube and at least one transmission medium positioned within the buffer tube. The buffer tube is made of an aliphatic polyketone; more particularly, the buffer tube is made of a terpolymeric aliphatic polyketone. More specifically, the aliphatic polyketone is Carilon™.

*Fig. 1*

**Description**

**Technical Field**

The present invention is generally related to fiber optic cables and, more particularly, is related to fiber optic buffer tubes.

**Background Of The Invention**

Optical fiber cables have been in use in communications industries for a number of years to transmit information at very high rates over long distances. In an optical fiber cable the information is carried in the form of light signals through glass fibers. These fibers are protected from the environment and external stresses by the cable structure.

Optical fiber cables may be classified into three general classifications based on cable structure: loose tube, slotted core, and monotube. In loose tube optical fiber cables, the optical fibers lie in a plurality of optical fiber buffer tubes which are generally filled with some type of water blocking compound such as a gel. The loose tube buffer tubes are stranded around a central strength member. In the loose tube design, in addition to the buffer tubes, filler rods may be stranded around the central member in order to provide symmetry in design for fiber counts lower than that of a full fiber count cable. The filler rods may be made of solid or cellular polymer.

In a slotted core cable the optical fiber reside in channels or slots that are generally filled with a water-blocking gel. The channel or slots are symmetrically placed around the central core and form helical or reverse-helical grooves extending along the longitudinal axis of the cable for receiving one or more optical fibers. In order to ensure that the optical fibers are not subject to destructive tensile and compressive stresses when the cable is bent, each slot may be made so as to follow a helical path. Thus, at a curved part of a cable, an optical fiber experiences compression and tension, and over the length of the curve the stresses at least partially cancel out. In some cables, the direction of lay of the helices may reverse at periodic intervals.

In a monotube cable the optical fibers reside in a central tube which is generally filled with some type of water-blocking compound. In all of these structures, the buffer tube or core provides the primary structure to protect the thin optical fibers contained within. Typically the buffer tubes or core is jacketed with additional protective layers. Additionally, reinforcing yarns or fibers as well as water-blocking materials in the form of gels or hot melts, water swellable powders, yarns, or tapes, and/or corrugated armor may be placed between the jacket and the inner cable layers to strengthen and protect the optical fibers.

For each buffer tube design, it is important to choose material combinations which are compatible in terms of basic material properties and processability and exhibit desirable engineering thermoplastic characteristics. Key properties relevant in choosing the material and processing conditions include hydrolytic stability, heat resistance, dimensional stability, and chemical resistance. More specifically, the choice of materials and processing conditions should produce a tube that is kink-resistant, i.e., flexible, as well as having the ability to withstand compressive load-crush resistance. Additional parameters that are relevant to choosing the material and processing conditions are tensile strength, flexural strength, flexural modulus, heat deflection temperature under a three-point bending stress, and the limiting oxygen index.

Materials and processing conditions must be chosen which result in a cable which has high compression resistance and tensile strength, combined with a low amount of residual stress. It is also important to choose a combination of materials and processing conditions that has minimal changes in dimensions as a function of time and temperature. It is desirable for a material to have a low coefficient of thermal expansion to ensure that the fibers are not placed under stress as the cable endures the high and low temperature extremes encountered within its environment. Material and processing conditions that minimize process-induced orientation are also desired since these will minimize the post-extrusion relaxation and shrinkage of cable components. Post-extrusion shrinkage of buffer tubes can lead to an increase in excess fiber length, a ratio of fiber length to actual tube length, which can, in turn, cause increases in fiber attenuation.

Polycarbonates, fluoropolymer, polybutylene terephthalate, Nylon-12, polypropylene-polyethylene copolymer, polyester elastomer, acetal resins and the like have been used as buffer tube materials. However, these materials have material, product, cable performance, and economic drawbacks.

For example, polybutylene terephthalate (PBT) is the most commonly used polymeric material for making loose tube fiber optic buffer tubes and is considered the industry standard. However, it has some inherent disadvantages, one of which is that PBT is susceptible to hydrolysis and the attack leads to loss of strength. Additionally, PBT is a stiff material, with a flexural modulus of at least 330,000 psi, and any attempt to improve its flexibility, i.e., make it less stiff, results in a more expensive product.

Alternatively, the copolymer polypropylene-polyethylene (PP) has been used as a buffer tube material rather than PBT. This polymer has a flexural modulus of about 200,000 psi and therefore is more flexible than PBT. However, there are other undesired properties associated with the resin. PP copolymer shrinks during and after processing. This shrinkage has a heavy bearing on creation of excess fiber length, an important detriment that influences the attenuation of optical fibers. Additionally, it has a lower tensile, flexural and compression strength than PBT. Also the thermal resistance is inferior to an engineering thermoplastic. All of these properties are required for some of the more demanding applications of fiber optic cables.

Accordingly, there is a need in the industry for a buffer tube material that has the advantages of PBT and PP, while minimizing their disadvantages.

## Summary Of The Invention

The present invention provides a fiber optic buffer tube made of an aliphatic polyketone, wherein the aliphatic polyketone is a terpolymeric aliphatic polyketone. More specifically, the aliphatic polyketone is Carilon™, available from Shell Chemical Company in Houston, Texas. A buffer tube composed of Carilon™ has the following characteristics: the aliphatic polyketone buffer tube has a greater tensile strength than the polypropylene-polyethylene copolymer buffer tube. The aliphatic polyketone buffer tube is kink-resistant and has a percent elongation at maximum load of about 22% of the original length. Percent elongation is defined as ((final length - original length)/original length) $^*$ 100. The aliphatic polyketone buffer tube has a greater flexural strength than the polypropylene-polyethylene copolymer buffer tube. The aliphatic polyketone buffer tube has a lower flexural modulus than a polybutylene terephthalate buffer tube but greater compression resistance than a polybutylene terephthalate buffer tube. The aliphatic polyketone buffer tube has a higher limited oxygen index than a polypropylene-polyethylene copolymer buffer tube and the aliphatic polyketone buffer tube has a higher heat deflection temperature under load than a polybutylene terephthalate buffer tube.

The present invention can also be viewed as providing a fiber optic cable. The fiber optic cable is made of at least one buffer tube and at least one transmission medium positioned within the buffer tube. The buffer tube is made of an aliphatic polyketone; more particularly, the buffer tube is made of a terpolymeric aliphatic polyketone. More specifically, the aliphatic polyketone is Carilon™.

Other features and advantages of the present invention will become apparent to one with skill in the art upon examination of the following drawings and detailed description. It is intended that all such additional features and advantages be included herein within the scope of the present invention.

## Brief Description Of The Drawings

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

The drawings, not drawn to scale, include:

FIG. 1 is a cutaway section of a loose tube fiber optic cable.

FIG.2 is a cutaway section of a monotube fiber optic cable.

FIG. 3 is a cutaway section of a slotted core fiber optic cable.

## Detailed Description Of The Invention

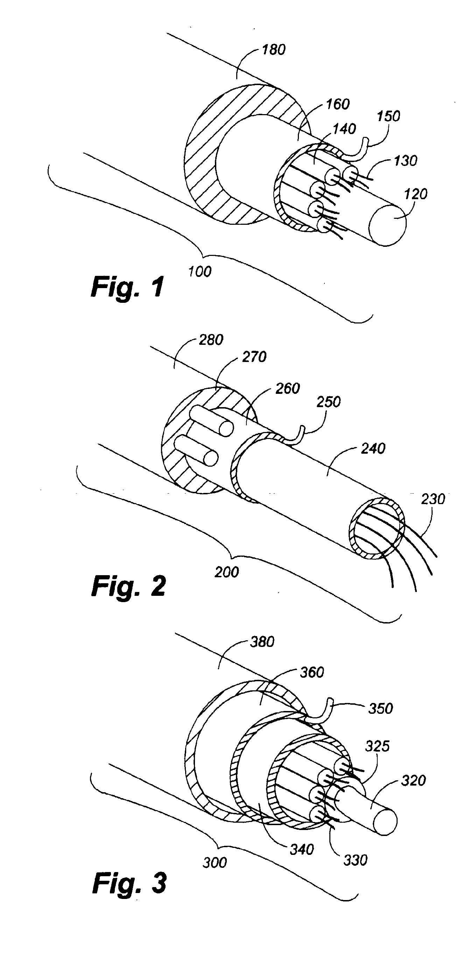

FIG. 1 is an illustration of a loose tube fiber optic cable 100, which incorporates the present invention. Typically, this structure incorporates a central strength member 120. A plurality of buffer tubes 140 is stranded around the central strength member 120. Optical fibers 130 are contained within the buffer tubes 140. Generally, in addition to the optical fibers 130, the buffer tubes 140 are filled with a gel. Radial strength yarns 160 are wrapped around the central strength member 120 and the buffer tubes 140. A ripcord 150 is placed in a position such that the radial strength yarns 160 and outer layers can be at least partially removed to access the inner layers. Additionally, armor (not shown) can be placed around the central strength member 120, buffer tubes 140, and the yarns 160 to further protect the cable. Lastly, an outer jacket 180 is placed around the internal components of the cable.

FIG. 2 is an illustration of a monotube fiber optic cable 200, which incorporates the present invention. The central core tube 240 contains optical fibers 230. Additionally, the tube may contain a gel. Radial strength yarns 260 are wrapped around the central core tube 240. A ripcord 250 is placed in a position such that the radial strength yarns 260 and the outer layers can be at least partially removed to access the inner layers. Strength members 270 are placed around the yarns and central core tube 240. However, the strength members 270 may be placed into different positions with in the cable structure. Additionally, armor (not shown) can be placed around the central core tube 240 and the yam 260 to further protect the cable. Lastly, an outer jacket 280 is placed around the internal components of the cable.

FIG. 3 is an illustration of a slotted tube optical fiber cable 300, which incorporates the present invention. A slotted core 325 surrounds a central strength member 320. The slotted core 325 contains within it optical fibers 330. The buffer tube 340 contains within it the slotted core 325 and also may contain may contain a gel. A radial strength yam 360 is wrapped around the buffer tube 340, slotted core 325, and the central strength member 320. A ripcord 350 is placed in a position such that the radial strength yarns 360 and other outer layers can be at least partially removed to access the inner portion of the cable. Additionally, armor (not shown) can be placed around the central strength member 320, buffer tube 340, and the yam 360, to further protect the cable. Lastly, an outer jacket 380 is placed around the internal components of the cable.

One skilled in the art would notice that the fiber optic cables described in FIGs. 1-3 are simplistic diagrams. Thus, it would be clear to one skilled in the art that additions or deletions from these cable designs can be easily accomplished, while not significantly affecting the present invention.

Aliphatic polyketones are produced from simple and abundant monomers and are readily distinguishable from aromatic polyketones such as Polyether Ether Ketone (PEEK) or Polyether Ketone (PEK). PEEK and PEK are ultrahigh-performance specialty polymers derived from expensive raw materials.

Aliphatic polyketones are produced by the efficient copolymerization of ethylene and carbon monoxide resulting in a linear, high molecular weight, alternating copolymer. The polymer chains are flexible but possess enough molecular symmetry and cohesive energy derived from the polar ketone groups to produce a tough, high-melting, semicrystalline thermoplastic. Commercially available aliphatic polyketones are sold under the trade name Carilon™ by Shell Chemical Company. The grade considered for our invention is a terpolymeric aliphatic polyketone. It is obtained by introducing a second olefinic monomer such as propylene (5-7 wt. %), which will substitute randomly for ethylene, and in alternation with carbon monoxide. The role of the terpolymer is to modify the melting point and crystallinity of the polymer to achieve a broader processing window and ductility of the polymer.

Aliphatic polyketones exhibit many desirable engineering thermoplastic characteristics including a high degree of chemical resistance, as well as superior barrier, thermal, and physical properties. The hydrolytic stability is particularly good in aliphatic polyketones, which leads to performance advantages over many condensation polymers like polyamides, *e.g.*, nylon, polyesters, and PBT. The flexible chain and high concentration of dipoles associated with the backbone structure of aliphatic polyketones also promote low free volume in the polymer matrix. As a result, aliphatic polyketones exhibit superior barrier properties to hydrocarbons and small gases.

Table 1 compares some important characteristics of PBT, PP/PE, and aliphatic polyketones.

Table 1.

| Comparison of Buffer Tube Material | | | |
|---|---|---|---|
| Physical Property | PBT | PP/PE Copolymer | Aliphatic Polyketone |
| Tensile Strength at Yield (psi) | 8,000 | 4,100 | 8,700 |
| Flexural Strength (psi) | 12,000 | 4,800 | 8,000 |
| Flexural Modulus (psi) | 330,000 | 200,000 | 230,000 |
| Heat Deflection Temp. (°C) | 150 | 106 | 210 |

Buffer tube flexibility is an important characteristic when considering new applications and performance requirements for the fiber optic cables. Additionally, it is advantageous for buffer tubes to be kink-resistant. In some instances, like compact splice enclosures, buffer tubes need to be capable of withstanding small bend radii without fear of kinking the tube and causing damage to the optical fibers.

Aliphatic polyketone Carilon™ buffer tubes (hereinafter Carilon™) are as flexible, and yet perform as well or better than, other widely-used buffer tube materials, such as PBT. Carilon™ has a flexural modulus of 230,00 which, when compared to PBT with a flexural modulus of 330,000, demonstrates that Carilon™ is about 30% more flexible than PBT. To further illustrate the unexpected result that Carilon™ is more flexible, consider the following equation:

$$P_c = A*E*(h/R)^3$$

where $P_c$ is compression resistance, A is a proportionality constant, h is the buffer tube radius, and E is the tube modulus. Holding A, h, and R constant while increasing E should produce a larger $P_c$. Following this logic one would predict that PBT (E=330,000) would have a larger $P_c$ than Carilon™ (E=230,000). However, Carilon™ has a larger $P_c$ than PBT, which is a totally unexpected result.

Additionally, PBT-based buffer tube materials are difficult to handle and manipulate due to the stiffness of PBT. The difficulty is further compounded by the fact that stiffer tubes tend to kink. Tensile elongation at maximum load for aliphatic polyketone is about 22% of the original length, compared to 4% for PBT. Percent elongation is defined as ((final length - original length)/ original length) $^*$ 100. The larger the percentage, the better the kink-resistance. Thus, aliphatic polyketones are more flexible and kink-resistant than the industry-standard PBT.

Further, Carilon™ has a greater Heat Deflection Temperature Under Flexural Load (HDTUL) than both PBT and PP/PE. Heat deflection temperature provides a measure of the temperature at which a material loses its load-bearing capacity. Compared to PP/PE, the limiting oxygen index (LOI) for Carilon™ is higher, 21%, which is about the same value of PBT. LOI is important in cable designs because replacing a higher LOI material with a lower LOI plastic would affect the cable's burn performance. Therefore, it is highly attractive to find a flexible buffer tube replacement without disturbing the burn characteristic of the material as defined by LOI.

For purpose of cable testing, a cable design consisting of five buffer tubes, all made of Carilon™ was constructed. Two of the five tubes contained twelve fibers each, whereas the remaining three were made without fibers therein.

Below are given the typical processing parameters employed to manufacture buffer tube made of Carilon™ resin. It was found that under the following set of processing conditions the extruder output was very stable, as were the tube dimensions. The Carilon™ resin was extruded in a 30mm Maileffer barrier-mixing type screw extruder with a ratio of length to diameter (L/D) of 24:1 and compression ratio of 2.5:1 and with Nokia-Maileffer model 4/6 crosshead using a screen pack of 40/120/40 mesh, with a line speed of 50 meters/minute.

Table 2.

| A Reversed Temperature (°F) Profile was set for the Extruder Zones | |
|---|---|
| Extruder Zones | °F |
| Z1 | 500 |
| Z2 | 500 |
| Z3 | 500 |
| Z4 | 500 |
| Collar | 480 |
| Head | 470 |
| Die | 450 |
| Melt Temp. | 468 |

Table 3.

| Other Relevant Experimental Parameters | |
|---|---|
| Line Speed | 50 meters/minute |
| Pressure | 1020 psi |
| Extruder Screw | RPM 107 |
| Motor Load | 11.4 Amps |
| Jelly (filling compound) | RPM 18.8 |
| Jelly Temperature | 100°C |
| 1st Water Trough Temperature | 45°C |
| 2nd Water Trough Temperature | 20°C |
| Tube OD | 3.0 mm |
| Tube ID | 2.0 mm |

The Carilon™ resin utilized in the present invention has a melt flow rate of 4 g/10min at 2.16 kg load and 240°C. Its limiting viscosity number (LVN) is 1.86. LVN is better known by its common name, intrinsic viscosity (IV). LVN of a polymer is related to its average molecular weight by Mark-Houwink equation. Buffering experiments were also conducted on another grade of Carilon™ whose MFR is 2.7-3 g/10min and a LVN of 2.05. It is generally known that a lower MFR (high melt viscosity) polymeric resin is better suited for extrusion processing than a resin grade of higher melt flow. However, in the present invention, it was found to the contrary because of the problem of tube dimensional instability.

The excess fiber length (EFL) is the slack length of the fiber that resides in the tube and is influenced by such process parameters like fiber back tension during the pay-off, water trough temperature, melt temperature, melt temperature, line speed, etc. It was found that the EFL could be controlled by varying the first water trough temperature, so that the EFL can be tailor-made.

Table 4.

| EFL vs. Water Trough Temperature | |
| --- | --- |
| EFL (mm) | Water Trough Temperature (°C) |
| 0 | 40 |
| 1-2 | 45 |
| 4-5 | 50 |

It should be noted that an EFL of zero is unexpected. An EFL of zero indicates that the tube has no post-extrusion shrinkage, and was found to remain stable over time. Standard mechanical and environmental testing was performed per Telcordia Technologies, Inc. (formerly Bellcore) GR-20-CORE, Issues 1 and 2, "Generic Requirements for Optical Fiber and Optical Fiber Cable." The cable's performance was found to be in compliance with the following requirements: (1) mechanical GR-20-CORE, Issue 1, Sections 6.5.1-6.5.8; GR-20-CORE, Issue 2, Section 6.5.9. The cable withstood a compressive load of 320 N/cm, well exceeding the Bellcore specification requirements of 220 N/cm, an unexpected result for a material of 230,000 psi flexural modulus. By comparison, a cable of same design or construction utilizing PBT buffer tubes yielded a value of only 280 N/cm; (2) Cable Material Compatibility, GR-20-CORE, Issue 2, Section 6.3.4; (3) Environmental GR-20-CORE, Issue 1, Sections 6.6.3-6.6.7; and (4) Buffer Tube Shrinkage and Cold Bend per RUS PE-90.

Additionally, Carilon™ can be obtained at a price highly competitive with that of PBT. However, if the advantageous features of Carilon™ were to be engineered into PBT, the prices would be prohibitively high relative to aliphatic ketones. Thus, Carilon™ combines the benefits of PBT and PP/PE, yet does not contain their individual weaknesses. Further, Carilo™ is priced competitively with other engineering thermoplastics, such as PBT.

It should be emphasized that the above-described embodiments of the present invention, particularly, any "preferred" embodiments, are merely possible examples of implementations, merely set forth for a clear understanding of the principles of the invention.

**Claims**

1.   A fiber optic buffer tube comprising an aliphatic polyketone.

2.   The fiber optic buffer tube of Claim 1, wherein the aliphatic polyketone comprises a terpolymeric aliphatic polyketone.

3.   The buffer tube of claim 1, wherein the aliphatic polyketone comprises Carilon™.

4.   The buffer tube of claim 1, wherein the aliphatic polyketone has a greater tensile strength than a polypropylene-polyethylene copolymer.

5.   The buffer tube of claim 1, wherein the aliphatic polyketone is kink-resistant and has an elongation at yield of about 22%.

6.   The buffer tube of claim 1, wherein the aliphatic polyketone has a greater flexural strength than a polypropylene-polyethylene copolymer.

7. The buffer tube of claim 1, wherein the aliphatic polyketone has a lower flexural modulus than polybutylene terephthalate but greater compression resistance than polybutylene terephthalate.

8. The buffer tube of claim 1, wherein the aliphatic polyketone has a higher limited oxygen index than polypropylene-polyethylene copolymer.

9. The buffer tube of claim 1, wherein the aliphatic polyketone has a higher heat deflection temperature under load than polybutylene terephthalate.

10. A fiber optic cable comprising:

at least one buffer tube comprised of an aliphatic polyketone, and

at least one transmission medium positioned within the buffer tube.

11. The cable of Claim 10, wherein the aliphatic polyketone comprises a terpolymeric aliphatic polyketone.

12. The cable of claim 10, wherein the aliphatic polyketone comprises Carilon™.

13. The cable of claim 10, wherein the aliphatic polyketone has a greater tensile strength than a polypropylene-polyethylene copolymer.

14. The cable of claim 10, wherein the aliphatic polyketone is kink-resistant and has an elongation at yield of about 22%.

15. The cable of claim 10, wherein the aliphatic polyketone has a greater flexural strength than a polypropylene-polyethylene copolymer.

16. The cable of claim 10, wherein the aliphatic polyketone has a lower flexural modulus than polybutylene terephthalate but a greater compression resistance than polybutylene terephthalate.

17. The cable of claim 10, wherein the aliphatic polyketone has a higher limited oxygen index than a polypropylene-polyethylene copolymer.

18. The cable of claim 10, wherein the aliphatic polyketone has a higher heat deflection temperature under load than polybutylene terephthalate.

Fig. 1

Fig. 2

Fig. 3

**European Patent Office**

## EUROPEAN SEARCH REPORT

Application Number

EP 00 31 0930

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,P | US 6 049 647 A (HALL DONALD K ET AL) 11 April 2000 (2000-04-11) | 1,10 | G02B6/44 |
| A | * claims; figures * | 4,8 | |
| | --- | | |
| A | US 6 001 955 A (MACHADO JOSEPH MICHAEL) 14 December 1999 (1999-12-14) * claims; figures * | 1,2,7 | |
| | --- | | |
| Y,P | WO 00 12145 A (ADVANCED CARDIOVASCULAR SYSTEM) 9 March 2000 (2000-03-09) * claims; figures * | 1-3,5,10 | |
| | --- | | |
| Y,P | US 6 025 422 A (HALL DONALD K) 15 February 2000 (2000-02-15) * claims; figures * | 1-3,5,10 | |
| | --- | | |
| A | US 5 043 389 A (GERGEN WILLIAM P ET AL) 27 August 1991 (1991-08-27) * claims; figures * | 1,2 | |
| | ----- | | **TECHNICAL FIELDS SEARCHED** (Int.Cl.7) |
| | | | G02B |

The present search report has been drawn up for all claims

| Place of search | Date of completion of the search | Examiner |
|---|---|---|
| THE HAGUE | 15 March 2001 | Pfahler, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**                    EP 00 31 0930

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2001

| Patent document cited in search report | | Publication date | Patent family member(s) | | Publication date |
|---|---|---|---|---|---|
| US 6049647 | A | 11-04-2000 | US<br>JP | 5917977 A<br>11176255 A | 29-06-1999<br>02-07-1999 |
| US 6001955 | A | 14-12-1999 | AU<br>WO | 5976999 A<br>0015706 A | 03-04-2000<br>23-03-2000 |
| WO 0012145 | A | 09-03-2000 | AU | 5680499 A | 21-03-2000 |
| US 6025422 | A | 15-02-2000 | JP | 2000007883 A | 11-01-2000 |
| US 5043389 | A | 27-08-1991 | NONE | | |

EPO FORM P0459

For more details about this annex : see Official Journal of the European Patent Office, No. 12/82